# EUROPÄISCHE PATENTSCHRIFT

(11) **EP 0 578 977 B1**
(45) Veröffentlichungstag und Bekanntmachung des Hinweises auf die Patenterteilung: **02.10.1996**
(21) Anmeldenummer: 93109515.2
(22) Anmeldetag: 15.06.1993
(51) Int. Cl.: B23Q 27/00, B23B 1/00, B23B 29/12

(54) **Vorrichtung und Steuerung zum Erzeugen von Unrund-/Ballig-Geometrien an Drehteilen**
Device and control for forming non-cylindrical surfaces on workpieces
Dispositif et contrôle à former des surfaces non-cylindriques à des pièces

(30) Priorität: 13.07.1992 DE 4222967
(43) Veröffentlichungstag der Anmeldung: 19.01.1994
(73) Patentinhaber: Hüller Hille GmbH, D-71636 Ludwigsburg (DE)
(72) Erfinder: Kübler, Albert, Dipl.-Ing., D-6900 Heidelberg (DE); Hoffmann, Martin, Dr., D-6934 Neckargerach (DE)
(74) Vertreter: Beyer, Rudi

(56) Entgegenhaltungen:
- EP-A- 479 025
- WO-A-90/11859
- DE-A- 2 006 760
- DE-U- 8 513 146
- FR-A- 2 392 765
- US-A- 3 754 487

## Beschreibung

Die Erfindung betrifft eine Bearbeitungseinheit zum Erzeugen von Unrund-/Ballig-Geometrien an Drehteilen, unter Verwendung einer NC-Drehmaschine, mit mindestens einer horizontalen und einer vertikalen Maschinenachse und einem Schneidarm zum Bearbeiten des Werkstückes, die als Zusatzeinrichtung auf die NC-Maschine adaptiert werden kann, wobei die Achse der Bearbeitungseinheit NC-gesteuert ist.

Des weiteren betrifft die Erfindung eine Steuerung.

Aufgrund von Wärmeeinwirkungen auf den Kolben von Maschinen, insbesondere Verbrennungskraftmaschinen, ist es erforderlich, Kolben ballig und unrund an ihrer äußeren Mantelfläche herzustellen. Diese Unrundheit hat bisher meist einen regelmäßigen mathematischen Verlauf. Beispielsweise ergibt sich als Bewegungsverlauf für einen Taststift, der am Kolbenmantel anliegt bei einer Kolbenumdrehung ein sin²x-förmiger Bewegungsablauf. Üblicherweise ändert sich entsprechend der Kolbenhöhe die Amplitude der Unrundheit, aber nicht ihre mathematische Form. Der Kolbenwerkstoff ist vorzugsweise eine Aluminiumlegierung. Je nach Anwendung ist es auch üblich, im Ringbereich des Kolbens einen Ringträger in den Kolben einzugießen.

Die Bearbeitung der Kolbenmantelflächen erfolgt dabei üblicherweise auf Drehmaschinen. Dabei wird der Kolbenmantel zunächst vorgedreht. Danach wird auf einer weiteren Maschine die Fertigbearbeitung des Kolbenmantels durchgeführt. Hierbei wird die Unrundheit und Balligkeit angearbeitet. Die Spantiefe beträgt wenige 1/10 mm. Als Schneidstoffe kommen im Aluminiumbereich PKD (Polykristalliner Diamant) und im Ringträgerbereich HM (Hartmetall) zum Einsatz.

Die Fertigbearbeitung der Kolbenmantelflächen wird auf NC-Maschinen mit einer zusätzlichen mechanischen Kopiereinheit durchgeführt. Dabei rotiert synchron zum Werkstück ein Meisterkolben (CAM), wobei mit einer an einem Tastarm befestigten Schneide die CAM-Geometrie auf das Werkstück übertragen wird. Hierbei liegen die Drehzahlen üblicherweise im Bereich bis zu ca. 1500 min-1.

Die neuesten Entwicklungen streben an, auf den Meisterkolben ganz zu verzichten und die Schnittgeschwindigkeiten zu optimieren.

Zum Beispiel hat die Firma OKUMA eine lineare Zusatzachse mit Linearmotorantrieb vorgeschlagen.

Ein ähnlicher Vorschlag ist von der Firma Ex-Cell-O bekannt (EP-A-0 479 025).

Desgleichen von der Firma The Cross Company (US-PS 4 653 360).

Die Firma Mahle GmbH hat ebenfalls eine lineare Zusatzachse mit Antrieb durch eine Tauchspule vorgeschlagen (DE-PS 27 24 808).

In der Zeitschrift Werkstatt und Betrieb, 123. Jahrgang, 5/90, S. 396-400, (München, DE), wird beschrieben, wie asymetrische Werkstücke mit einem schnellansprechenden Servosystem gedreht werden können.

Eine Bearbeitungseinheit mit den Merkmalen des Oberbegriffes des Patentanspruches 1 ist aus der WO-A-90 11859 vorbekannt. Die dort beschriebene Bearbeitungseinheit dient vornehmlich zum Bearbeiten von Linsen und ähnlich flachen Teilen mit konkaven oder konvexen Oberflächen.

Der Erfindung liegt die Aufgabe zugrunde, eine Bearbeitungseinheit gemäß der vorausgesetzten Gattung dahingehend auszugestalten, daß durch eine Zusatzachse sich hochpräzise Unrund-/Ballig-Geometrien an Drehteilen aller Art herstellen lassen. Es wird verlangt, zur Bearbeitung ein oder mehrere Schneidmittel bereitzuhalten und den Wechsel von Schneidmittel 1 zu Schneidmittel 2 schnellstmöglich durchzuführen.

Des weiteren liegt der Erfindung die Aufgabe zugrunde, eine vorteilhafte Steuerung vorzuschlagen.

Die Aufgabe wird durch die in **Patentanspruch 1** wiedergegebenen Merkmale gelöst.

Die erfindungsgemäße Vorrichtung stellt die Bearbeitungseinheit mit einer hochdynamischen, regelbaren Werkzeugachse dar, mit einem programmierbaren Rotations-Direktantrieb zur Erzeugung von Unrund-Ballig-Geometrien an Drehteilen beliebiger Art. Auf diese Weise lassen sich schnell und hochpräzise, insbesondere Kolben an ihrer äußeren Mantelfläche unrund-/ballig bearbeiten.

Die hohe Dynamik der Zusatzachse erlaubt Bewegungsfrequenzen bis 100 Hertz. Damit kann sich die Drehzahl der zu bearbeitenden Werkstücke, z. B. Kolben, bis auf 3000 min⁻¹ erhöhen. Die gegenüber den herkömmlichen Verfahren erhöhte Drehzahl erlaubt es, die verwendeten Schneidstoffe wirtschaftlicher zu nutzen. Ebenso verkürzt sich die Bearbeitungszeit der Werkstücke durch die erhöhte Schnittgeschwindigkeit und den schnellen Werkzeugwechsel. Der Werkzeugwechsel erfolgt durch die Verwendung der zur Verfügung stehenden NC-Bearbeitungsachse.

Entgegen der herkömmlichen Kopiermethode sind bei dem beschriebenen Verfahren keine Meisterkolben (Cam) mehr erforderlich. Dadurch wird im Zusammenhang mit der Programmierbarkeit dieser Zusatzeinrichtung die Flexibilität wesentlich erhöht und die Umrüstzeit deutlich verringert. Durch den Entfall des Meisterkolbens und der mechanischen Abtast- und Übertragungseinheit entfallen verschleißbehaftete und verschmutzungsgefährdete Elemente.

Damit steigt die Prozeßsicherheit. Weiterhin wird durch den Entfall der mechanischen Abtast- und Übertragungseinheit die Zugänglichkeit zur automatischen Werkstückbeladung verbessert.

Der Verzicht auf verschleißbehaftete mechanische Bauelemente bei der Ausführung der NC-Unrundbearbeitungseinheit gewährleistet auf Dauer eine hohe Wiederholgenauigkeit.

Bei der erfindungsgemäßen Vorrichtung handelt es sich um eine "Zusatzeinrichtung", die auf eine beliebige NC-Maschine adaptiert werden kann. Die Vorrichtung hat eine NC-gesteuerte Achse. Aufgrund besonderer Anforderungen dieser Achse (Regelverhalten, Genauigkeit, Dynamik) kann die NC-Maschine die Steuerung der Bearbeitungseinheit nicht übernehmen. Deshalb wird eine eigene Steuerung für die erfindungsgemäße Vorrichtung beigestellt. Diese eigene Steuerung wird elektrisch von einer schnellen Signalprozessorkarte gesteuert. Die Signalprozessorkarte erfaßt über drei Meßsysteme die absolute Lage der Schneide am Werkstück, z.B. an einem Kolben. Aus einer auf der Karte abgelegten Matrix, auf der die Geometriedaten des zu bearbeitenden Kolbenmantels abgelegt sind, wird der nächste Lagesollwert in Abhängigkeit des abgebildeten Istwertes geholt und an den Lageregler auf der Karte gegeben. Der Lageregler bildet einen, neuen Stromsollwert für den nachgeschalteten Antriebsverstärker.

Bei der Ausführungsform nach **Patentanspruch 2**, ist das rotatorische Meßsystem bei einem hydrostatischen Achsiallager in zwei beabstandeten hydrostatischen Radiallagern gelagert.

In den **Patentansprüchen 3** bis **5** sind weitere vorteilhafte Ausführungsformen der Erfindung beschrieben.

### Lösung der Aufgabe betreffend die Steuerung

Diese Aufgabe wird durch die in **Patentanspruch 6** wiedergegebenen Merkmale gelöst.

Die Bearbeitungseinheit wird an dem Schlitten einer NC-Drehmaschine angebracht. Zur Bearbeitung fährt die horizontale Maschinenachse die Bearbeitungseinheit auf ein vorbestimmtes Maß an das zu bearbeitende Werkstück heran. Der in die Bearbeitungseinheit integrierte Drehstrom-Servomotor erzeugt ein Drehmoment und hält bzw. bewegt über den Verbindungsarm die Werkzeugschneide. Durch die Drehbewegung des Werkstückes, das Verfahren der vertikalen Maschinenachse und die NC-gesteuerte Bewegung der Werkzeugschneide kann die gewünschte Kolbenmantelfläche erzeugt werden.

Zum schnellen Wechsel der in Eingriff befindlichen Schneiden ist der Verbindungsarm zu schwenken oder das vorbestimmte Maß zu ändern. Die Anordnung der Schneiden erlaubt es, das Werkstück in gleicher Drehrichtung weiter zu bearbeiten.

In der Zeichnung ist die Erfindung - teils schematischan einem Ausführungsbeispiel veranschaulicht.

Es zeigen:

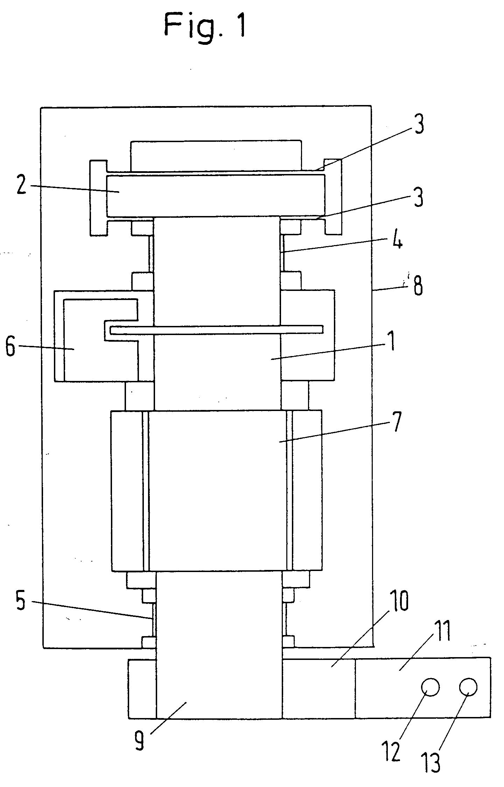

- Fig. 1: eine Bearbeitungseinheit gemäß der Erfindung in schematischer Darstellung;
- Fig. 2: eine teilweise Stirnansicht bei einer Bearbeitungseinheit gemäß der Erfindung;

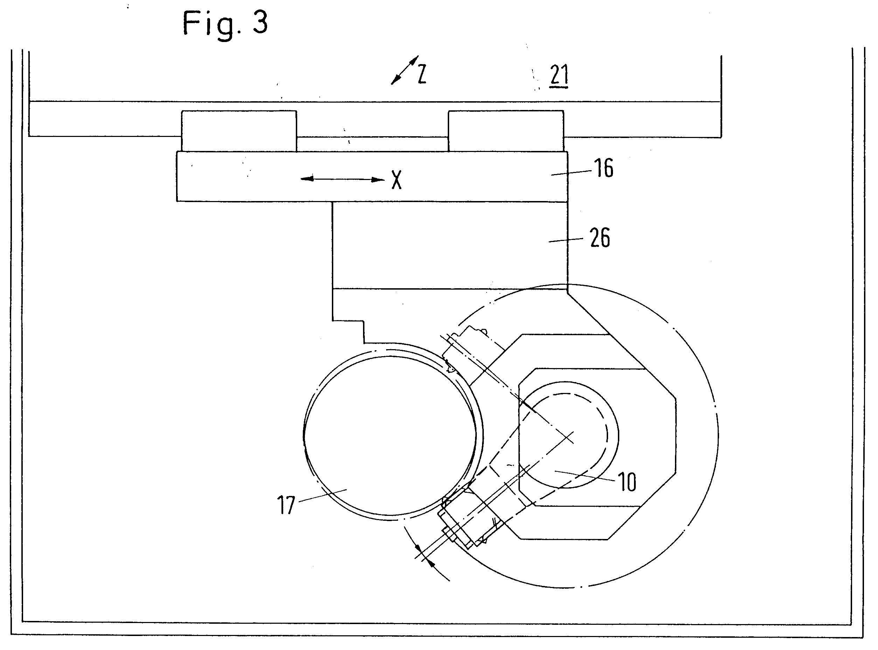

- Fig. 3: eine Draufsicht auf eine an eine NC-Drehmaschine angebaute Bearbeitungseinheit gemäß der Erfindung;

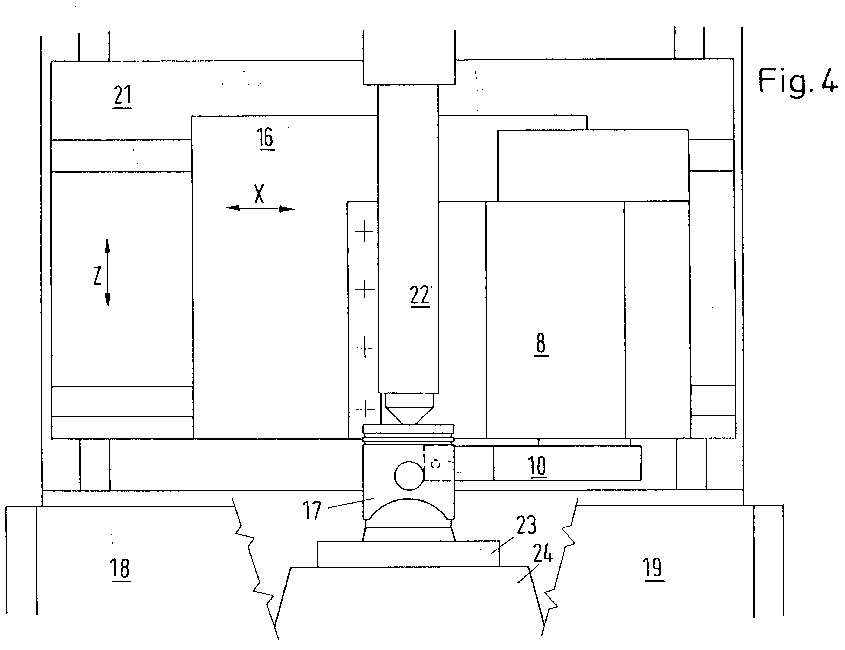

- Fig. 4: eine Vorderansicht zu Fig. 3;
- Fig. 5: eine prinzipielle Darstellung der Steuerung für ein Bearbeitungsverfahren mit einer Bearbeitungseinheit gemäß der Erfindung, und
- Fig. 6: die Anordnung von Einzelkomponenten als Blockbild.

Mit dem Bezugszeichen 1 ist eine Welle bezeichnet, die an ihrem einen Ende einen Bund 2 aufweist, der über ein hydrostatisches Achsiallager 3 und über im Abstand zu dem hydrostatischen Achsiallager 3 und zueineinander ebenfalls beabstandeten hydrostatischen Radiallagern 4 und 5 gelagert ist.

Mit dem Bezugszeichen 6 ist ein rotatorisches Meßsystem bezeichnet, während 7 einen hochdynamischen integrierten Drehstrom-Servomotor bezeichnet. Sowohl die Welle 1, deren Achsiallager 3 und Radiallager 4 und 5, das rotatorische Meßsystem 6 und der Drehstrom-Servomotor 7 sind in einem gemeinsamen Gehäuse 8 angeordnet.

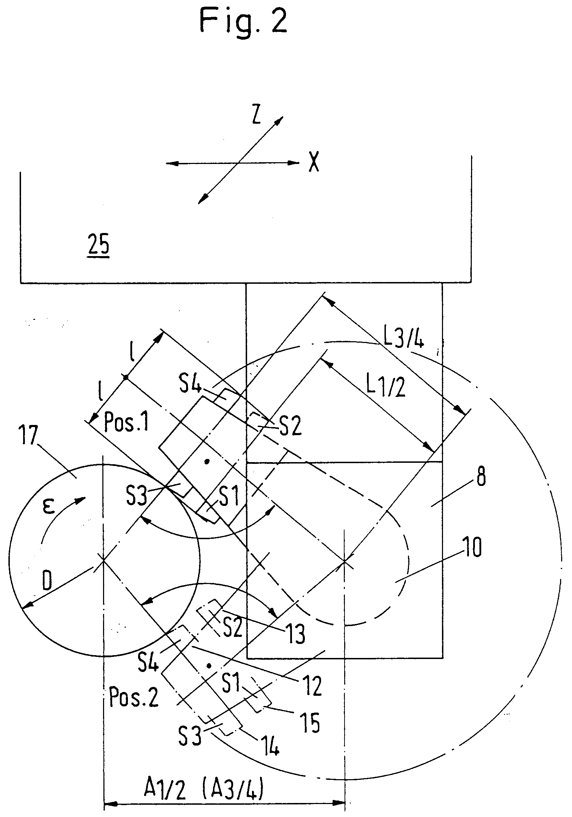

Die Welle 1 ragt an ihrem dem Bund 2 entgegengesetzten Endabschnitt 9 um ein begrenztes Maß aus dem gemeinsamen Gehäuse 8 heraus und ist in diesem Bereich mit einem Verbindungsarm 10 versehen, das einen Schneidenträger 11 aufweist, der mehrere auswechselbare Werkzeugschneiden 12, 13, 14 und 15 (Fig. 2) trägt. Die Anzahl der Werkzeugschneiden 12 bis 15 kann größer oder kleiner als dargestellt sein.

Mit 25 ist ein Werkzeugmaschinenschlitten bezeichnet.

Die horizontale Maschinenachse ist mit X und die vertikale Maschinenachse mit Z bezeichnet (Fig. 2).

Das Gehäuse 8 und damit die Bearbeitungseinheit gemäß der Erfindung ist über eine Adapterplatte 26 an einem Schlitten 16 der Werkzeugmaschine durch Schrauben oder dergleichen lösbar befestigt.

Das Bezugszeichen 17 bezeichnet ein zu bearbeitendes Werkstück, z. B. einen Kolben, während 18 und 19 Spänefallschächte, 16 ein Horizontalschlitten und 21 einen Vertikalschlitten darstellen. Mit 22 ist eine Abstützpinole und mit 23 eine Werkstückaufnahme sowie mit 24 eine Hauptspindel bezeichnet.

Das Bearbeitungsverfahren mit einer Bearbeitungseinheit gemäß der Erfindung läuft wie folgt ab:

Die Bearbeitungseinheit wird an dem Schlitten einer NC-Drehmaschine angebracht. Zum Bearbeiten fährt die horizontale Maschinenachse X über die Bearbeitungseinheit auf das Maß A (Fig. 2) an das Werkstück 17 heran. Der in die Bearbeitungseinheit integrierte Drehstrom-Servomotor 7 erzeugt ein Drehmoment und hält bzw. bewegt über den Verbindungsarm 10 die Werkzeugschneiden 12, 13, 14 und 15. Durch die Drehbewegung des Werkstücks 17, das Verfahren der vertikalen Maschinenachse Z und die NC-gesteuerte Bewegung der Werkzeugschneiden 12, 13, 14 und 15 kann die gewünschte Kolbenmantelfläche erzeugt werden.

Zum schnellen Wechsel der in Eingriff befindlichen Schneiden 12, 13, 14 und 15 ist der Verbindungsarm 10 aus seiner in Fig. 2, oben, mit ausgezogenen Linien gezeigten Stellung in die untere, gestrichelte Position zu schwenken oder das Maß A zu ändern, z.B. A 1/2 oder A 3/4. Die Anordnung der Schneiden 12, 13 und 14 erlaubt es, das Werkstück 17 in gleicher Drehrichtung weiter zu bearbeiten.

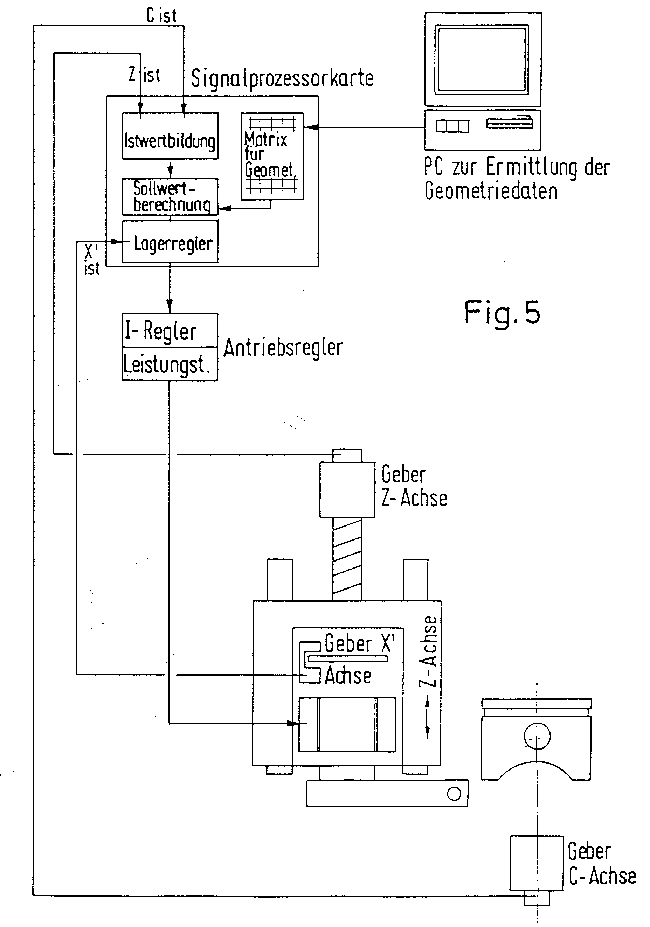

Aus Fig. 5 ist die Steuerungsprinzipskizze zu ersehen. Elektrisch wird die Einheit von einer schnellen Signalprozessorkarte gesteuert. Die Signalprozessorkarte erfaßt über drei Meßsysteme die absolute Lage der Schneiden 12, 13, 14 und 15 am Werkstück 17. Aus einer auf der Karte abgelegten Matrix, in der die Geometriedaten des zu bearbeitenden Werkstückes, z.B. eines Kolbenmantels, abgelegt sind, wird der nächste Lagesollwert in Abhängigkeit des gebildeten Istwertes geholt und an den Lageregler auf der Karte gegeben. Der Lageregler bildet einen neuen Stromsollwert für den nachgeschalteten Antriebsverstärker.

Von den Einzelkomponenten des Antriebssystems für die Bearbeitungseinheit wird der Motor, die Mechanik und das Meßsystem, also der mechanische Aufbau erfindungsgemäß auf den Anwendungsfall angepaßt, z.B. zum Kolbendrehen.

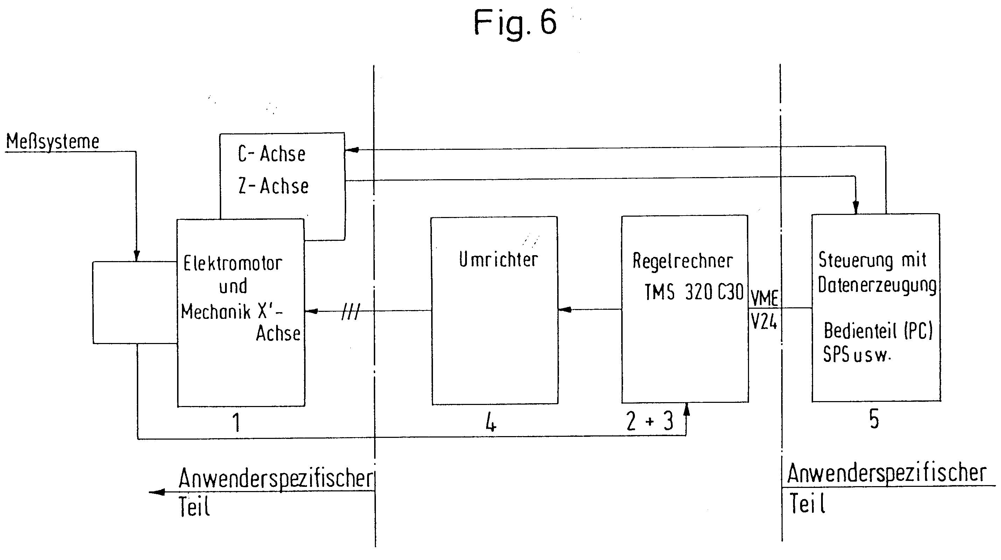

Wie aus Fig. 6 hervorgeht, ist in die Steuerung ein schneller Regelrechner auf der Basis eines Signalprozessors, z.B. TMS 320 C 30 mit I/O-Schnittstelle integriert. Grundsätzlich sind derartige hochdynamische Antriebe in Z: "Technische Rundschau 1991, Nr. 2, S. 40-44, "Komplexer und genauer - Signalprozessorsystem zur Regelung hochdynamischer Antriebe" erläutert.

Regelstrategien zur Regelung hochdynamischer Antriebe, die Kupplung der Bewegungsachsen sowie die Schnittstellen um Umrichter (Strom- oder Momentenschnittstelle) und zur überlagerten Steuerung (VME, 24) sind allgemein bekannt. Auch Umrichter (elektrische Stellen) sind Stand der Technik. Die Sollwerterzeugung hängt vom jeweiligen Anwendungsfall ab.

Die in der Zusammenfassung, in den Patentansprüchen, und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Welle
- 2: Bund
- 3: Achsiallager, hydrostatisches
- 4: Radiallager, hydrostatisches
- 5: Radiallager, hydrostatisches
- 6: Messystem, rotatorisches
- 7: Drehstrom-Servomotor, hochdynamischer
- 8: Gehäuse, gemeinsames
- 9: Endabschnitt
- 10: Verbindungsarm
- 11: Schneidenträger
- 12: Werkzeugschneide
- 13: Werkzeugschneide
- 14: Werkzeugschneide
- 15: Werkzeugschneide
- 16: Horizontalschlitten
- 17: Werkstück
- 18: Spänefallschacht
- 19: Spänefallschacht
- 20: -
- 21: Vertikalschlitten
- 22: Abstützpinole
- 23: Werkstückaufnahme
- 24: Hauptspindel
- 25: Werkzeugmaschinenschlitten
- 26: Adapterplatte
- A: Maß
- X: X-Achse, horizontale
- Z: Z-Achse, vertikale

## Patentansprüche

1. Bearbeitungseinheit zum Erzeugen von Unrund-/Ballig-Geometrien an Drehteilen, unter Verwendung einer NC-Drehmaschine, mit mindestens einer horizontalen und einer vertikalen Maschinenachse und einem Schneidarm zum Bearbeiten des Werkstückes, die als Zusatzeinrichtung auf die NC-Maschine adaptiert werden kann, wobei die Achse der Bearbeitungseinheit NC-gesteuert ist, **dadurch gekennzeichnet**, daß
a) die Bearbeitungseinheit mit einer hochdynamischen, regelbaren Werkzeugachse mit einem programmierbaren Rotations-Direktantrieb zur Erzeugung der Unrund-/Ballig-Geometrien der Drehteile (17) vorgesehen ist;
b) die Bearbeitungseinheit einen integrierten Drehstrom-Servomotor (7) aufweist, dessen die Achse bildende Welle (1) einen Verbindungsarm (10) aufweist, der ein oder mehrere Schneiden (12, 13, 14, 15) trägt;
c) die Welle (1) des integrierten Drehstrom-Servomotors (7) über beabstandete hydrostatische Radiallager (4, 5) und ein hydrostatisches Achsiallager (3) gelagert ist;
d) die die Achse bildende Welle (1), ein rotatorisches Meßsystem (6), das hydrostatische Achsiallager (3) und die hydrostatischen Radiallager (4, 5) sowie der integrierte Drehstrom-Servomotor (7) in einem gemeinsamen Gehäuse (8) angeordnet sind, aus dem die Welle (9) einseitig mit dem Verbindungsarm (10) mit Werkzeugschneiden (12, 13, 14, 15) herausragt und das an einem Schlitten (16) der NC-Maschine lösbar befestigbar ist.

2. Bearbeitungseinheit nach Anspruch 1, **dadurch gekennzeichnet**, daß die Welle (1), der integrierte Drehstrommotor (7) sowie das hydrostatische Achsiallager (3) und die hydrostatischen Radiallager (4, 5) koaxial in dem gemeinsamen Gehäuse (8) angeordnet sind.

3. Bearbeitungseinheit nach Anspruch 1 und/oder 2, **dadurch gekennzeichnet**, daß der Schneidenträger (11) an einem Ende des Verbindungsarms (10) die Schneiden (z.B. 12, 13) aufweist.

4. Bearbeitungseinheit nach Anspruch 1 oder einem der folgenden, **dadurch gekennzeichnet**, daß die Bearbeitungseinheit über dein Adapterstück (26) mit der Drehmaschine verbunden ist, derart, daß die Längsachse des Verbindungsarms (10) orthogonal zur Längsachse einer Abstützpinole (22) für das Werkstück (17) verläuft, wobei das Adapterstück (26) mit einem Horizontalschlitten (16) der Werkzeugmaschine verbunden ist, der seinerseits auf einem Vertikalschlitten (21) horizontal verschieblich geführt ist.

5. Bearbeitungseinheit nach Anspruch 1 oder einem der folgenden, **dadurch gekennzeichnet**, daß die gegenüberliegende Anordnung von wenigstens zwei Schneiden (z. B. 12, 14) und die Möglichkeit, die Welle (1) mit dem Verbindungsarm (10) um einen beliebigen Winkel zu rotieren, es ermöglicht, ohne das Bewegen weiterer Maschinenachsen von Schneide (12) zur Schneide (14) zu wechseln.

6. Steuerung für eine Bearbeitungseinheit zum Erzeugen von Unrund-/Ballig-Geometrien an Drehteilen unter Verwendung einer NC-Drehmaschine mit mindestens einer horizontalen und einer vertikalen Maschinenachse und einem Schneidarm zur Bearbeitung des Werkstückes, nach Anspruch 1 oder einem der folgenden, **dadurch gekennzeichnet**, daß
a) die Bearbeitungseinheit als Zusatzeinrichtung mit einer NC-gesteuerten Achse an der NC-gesteuerten Drehmaschine adaptiert wird;
b) wobei die NC-gesteuerte Achse der Zusatzeinrichtung von einer Signalprozessorkarte gesteuert wird, die über drei Meßsysteme die absolute Lage der Schneide am Werkstück, z. B. an einem Kolben, erfaßt, und auf der auf der Karte abgelegten Matrix, auf der die Geometrie-Daten des zu bearbeitenden Kolbenmantels o. dgl. abgelegt sind, der nächste Lagesollwert in Abhängigkeit des abgebildeten Istwertes abgerufen und an einen Lageregler gegeben wird, der einen neuen Stromsollwert für einen nachgeschalteten Antriebsverstärker bildet;
c) und ein in die Zusatzeinrichtung (Bearbeitungseinheit) integrierter Drehstrom-Servomotor ein Drehmoment erzeugt und ein Verbindungsarm mit Werkzeugschneiden an das Werkstück heranbewegt wird und über die Werkzeugschneide die gewünschte Kolbenmantelfläche erzeugbar ist, wobei
d) zum schnellen Wechsel der in Eingriff befindlichen Schneiden der Verbindungsarm schwenkbar und der Abstand der Schneiden vom Werkstück veränderbar ist.

## Claims

1. Device and control for forming non-cylindrical surfaces on workpieces, using an NC lathe with at least one horizontal and one vertical machine axis and a cutting arm for machining the workpiece, which can be adapted as an additional fixture on the NC machine, where the axis of the device and control is NC-controlled, **characterized by the fact that**
a) the device and control is provided with a highly-dynamic, controllable tool axis with a programmable direct rotary direct drive for forming the non-cylindrical surfaces on the workpieces (17);
b) the device and control incorporates an integral three-phase AC servomotor (7), whose shaft (1) forming the axis, incorporates a connecting arm (10), which bears several cutting tools (12, 13, 14, 15);
c) the shaft (1) of the integral three-phase AC servomotor (7) is located by means of spaced hydrostatic radial bearings (4, 5) and a hydrostatic thrust bearing (3);
d) the shaft (1) forming the axis, a rotary measuring system (6), the hydrostatic thrust bearing (3) and the hydrostatic radial bearings (4, 5), as well as the integral three-phase AC servomotor (7) are arranged in a common housing (8), from which on one side projects the shaft (9) with the connecting arm (10) with cutting tools (12, 13, 14, 15), and which can be detachably fixed to a slide (16) of the NC machine.

2. Device and control in accordance with Claim 1, **characterized by the fact that** the shaft (1), the integral three-phase AC motor (7), and the hydrostatic thrust bearings (3) and the hydrostatic radial bearings (4, 5) are arranged coaxially in a common housing (8).

3. Device and control in accordance with Claim 1 and / or 2, **characterized by the fact that** the cutting tool holder (11) incorporates the cutting tools (for example 12, 13) at one end of the connecting arm (10).

4. Device and control in accordance with Claim 1 or one of the subsequent Claims, **characterized by the fact that** the device and control is joined to the lathe via an adapter (26), in such as way that the longitudinal axis of the connecting arm (10) is perpendicular to the longitudinal axis of a supporting centre sleeve (22) for the workpiece (17), the adapter (26) being joined to a horizontal slide (16) of the machine tool, which for its part is guided on a vertical slide (21) so as to be movable horizontally.

5. Device and control in accordance with Claim 1 or one of the subsequent Claims, **characterized by the fact that** the opposite arrangement of at least two cutting tools (for example 12, 14) and the facility for rotating the shaft (1) with the connecting arm (10) through any angle makes it possible, without moving of other machine axes, to change from cutting tool (12) to cutting tool (14).

6. Control for a device and control for forming non-cylindrical surfaces on workpieces using an NC lathe with at least one horizontal and one vertical machine axis and a cutting arm for machining the workpiece in accordance with Claim 1, or one of the subsequent Claims, **characterized by the fact that**
a) the device and control is adapted as additional fixture with one NC-controlled axis on the NC-controlled lathe;
b) where the NC-controlled axis of the additional fixture is controlled by a signal-processor card which acquires by means of three measuring systems the absolute position of the cutting tool on the workpiece, for example on a piston, and on the matrix stored on the card, on which the geometry data of the piston circumference, or the like, to be machined are stored, the next setpoint position is retrieved as a function of the imaged actual value and passed to a position controller, which forms a fresh current setpoint value for the downstream drive amplifier;
c) and a three-phase AC servomotor integrated in the additional fixture (device and control) generates a torque, and a connecting arm with tool cutting edges is moved towards the workpiece, and the desired piston circumference can be produced by the tool cutting edge, where
d) for quick changing of the cutting tools in engagement, the connecting arm can swivel and the distance of the cutting tools from the workpiece can be varied.

## Revendications

1. Unité d'usinage servant à former des surfaces non-cylindriques sur des pièces tournées à l'aide d'un tour à commande NC, avec au moin un axe-machine horizontal et vertical et un bras de coupe pour usiner la pièce, cet axe étant adaptable comme dispositif d'appoint sur la machine à commande NC, l'axe de l'unité d'usinage étant piloté par la commande NC, **caractérisée en ce que**
a) L'unité d'usinage est équipée d'un axe d'outil haute dynamicité et régulable et d'un mécanisme d'entraînement rotatif direct et programmable servant a générer les surfaces non-cylindriques sur les pièces tournées (17);
b) L'unité d'usinage présente un servomoteur triphasé intégré (7) dont l'arbre (1) constitutif de l'axe présente un bras de liaison (10) comportant un ou plusieurs tranchants (12, 13, 14, 15);
c) L'arbre (1) du servomoteur triphasé intégré (7) repose sur des paliers radiaux hydrostatiques (4,5) distants l'un de l'autre et sur un palier axial hydrostatique (3);
d) L'arbre (1) constitutif de l'axe, un système métrologique rotatif (6), le palier axial hydrostatique (3) et les paliers radiaux hydrostatiques (4,5) ainsi que le servomoteur triphasé intégré (7) sont logés dans un carter collectif (8) d'où l'arbre (9) soit d'un côté avec le bras de liaison (10) doté des tranchants d'outils (12, 13, 14, 15) et qui est fixable de manière détachable contre un chariot (16) de la machine à commande NC.

2. Unité d'usinage selon revendication 1, **caractérisée en ce que** l'arbre (1), le moteur triphasé intégré (7), le palier axial hydrostatique (3) et les paliers radiaux hydrostatiques (4, 5) sont disposés coaxialement dans le carter collectif (8).

3. Unité d'usinage selon revendication 1 et/ou 2, **caractérisée en ce que** le porte-tranchants (11) situé à une extrémité du bras de liaison (10) présente les tranchants (par ex. 12, 13).

4. Unité d'usinage selon revendication 1 ou l'une des revendications suivantes, **caractérisée en ce que** l'unité d'usinage est reliée au tour par une pièce adaptatrice (26) de telle sorte que l'axe longitudinal du bras de liaison (10) soit perpendiculaire à l'axe longitudinal d'une douille d'appui (22) de la pièce (17), la pièce adaptatrice (26) étant reliée à un chariot horizontal (16) de la machine-outil lequel (16) de son côté se déplace horizontalement sur un chariot vertical (21).

5. Unité d'usinage selon revendication 1 ou l'une des revendications suivantes, **caractérisé en ce que** le fait qu'au moins deux tranchants (par ex. 12, 14) se fassent face et la possibilité de faire tourner l'arbre (1) avec le bras de liaison (10) selon un angle quelconque permettent de passer d'un tranchant (12) à l'autre (14) sans déplacer d'autres axes de la machine.

6. Commande pour une unité d'usinage servant à former des surfaces non-cylindriques sur des pièces tournées en utilisant un tour à commande NC présentant au moins un axe-machine horizontal et un vertical et un bras de coupe pour usiner la pièce, selon revendication 1 ou l'une des revendications suivantes, **caractérisée en ce que**
a) L'unité d'usinage s'adapte sur le tour à commande NC en tant que dispositif d'appoint équipé d'un axe piloté NC;
b) L'axe piloté NC du dispositif d'appoint est commandé par une carte à processeur de signaux qui par le biais de trois systèmes de mesure saisit la position absolue du tranchant sur la pièce, par ex. sur un piston et qui appelle, sur la matrice mémorisée sur la carte - matrice sur laquelle les données géométriques de l'enveloppe de piston (ou assimilée) à usiner sont mémorisées - la valeur de la position de consigne suivante en fonction de la valeur de position réelle reproduite et transmise à un régulateur de position qui définit une nouvelle tension de consigne destinée à un amplificateur moteur installé en aval;
c) Et en ce qu'un servomoteur triphasé intégré dans le dispositif d'appoint (unité d'usinage) génère un couple rotatif, qu'un bras de liaison équipé de tranchants d'outils est approché de la pièce et que le tranchant d'outil permet d'obtenir la surface-enveloppe désirée pour le piston,
d) Le bras de liaison pouvant pivoter pour changer rapidement de tranchant en attaque et l'écart entre les tranchants et la pièce étant modifiable.
